# EUROPÄISCHE PATENTANMELDUNG

(11) **EP 0 916 525 A2**
(43) Veröffentlichungstag der Anmeldung: **19.05.1999**
(21) Anmeldenummer: 98118605.9
(22) Anmeldetag: 01.10.1998
(51) Int. Cl.: B60G 11/02, B60G 3/26

(54) **Führung für ein Kraftfahrzeugrad**

(30) Priorität: 13.11.1997 DE 19750225
(71) Anmelder: DaimlerChrysler AG, 70567 Stuttgart (DE)
(72) Erfinder: Hack, Rainer, 74336 Brackenheim (DE); Kruse, Werner, 73614 Schorndorf (DE); Reuter, Wolfram, 55127 Mainz (DE); Siebelt, Dirk, 73773 Aichwald (DE)

(57) **Zusammenfassung**

Eine Führung für ein Rad eines Kraftfahrzeuges, mit das Rad und einen Rahmen des Kraftfahrzeuges koppelnden Radführungselementen soll dahingehend ausgestaltet werden, daß sie sich durch einen einfachen Aufbau auszeichnet und eine hohe Fahrsicherheit insbesondere beim Durchfahren von Kurven gewährleistet.

Dies wird erfindungsgemäß dadurch erreicht, daß die Radführungselemente zumindest in begrenzten Abschnitten elastisch verformbar ausgebildet sind, wobei durch eine entsprechende Ausgestaltung des Radführungselementes die Verformbarkeit von der Richtung der auf das jeweilige Radführungselement aufgebrachten Kräfte und/oder Drehmomente abhängt, derart, daß ein Anwachsen einer quer zur Fahrtrichtung des Kraftfahrzeuges wirkenden Seitenkraft eine zunehmende Veränderung des Eigenlenkverhalters des Kraftfahrzeuges in einer gewünschten Richtung bewirkt.

## Beschreibung

Die Erfindung betrifft eine Führung für ein Rad eines Kraftfahrzeuges, die das Rad und einen Rahmen des Kraftfahrzeuges koppelnde Radführungselemente aufweist.

Übliche Radaufhängungen weisen mehrere starre Lenker auf, die mit Hilfe von Kugel- und/oder Drehgelenken das Rad mit einem Rahmen des Kraftfahrzeuges koppeln. Durch diese starren Lenker wird die Lenk- und Federungskinematik des Rades festgelegt. Darüber hinaus können derartige Radführungen auch elastische Einzelelemente aufweisen, die beispielsweise aus Elastomeren hergestellt sind. Mit Hilfe dieser elastischen Einzelbauteile kann das elastokinematische Verhalten der Radführung beeinflußt werden.

Um die Anzahl der Einzelteile einer derartigen Radführung zu reduzieren, gibt es Bestrebungen, Bauteile zu verwenden, die richtungsabhängige Elastizitäten aufweisen, um so die Kinematik und Elastokinematik der Radführung zu beeinflussen. Dabei wird die Richtungsabhängigkeit der Bauteilelastizitäten durch eine entsprechende Ausgestaltung des jeweiligen Bauteiles und insbesondere durch die Verwendung faserverstärkter Kunststoffe erzielt, wobei die Ausgestaltung der jeweiligen Bauteile unter Berücksichtigung der E-Moduli und Dehngrenzen der verwendeten Werkstoffe durchgeführt wird.

Aus der EP 0 436 407 A1 ist eine Radführungsstruktur bekannt, bei der eine quer verlaufende Platte als Aufhängefederung für die Räder einer Achse des Fahrzeuges dient. Diese Querblattfeder ist aus einem faserverstärkten Kunststoff hergestellt, wobei die Fasern in einer bestimmten Weise ausgerichtet sind. Dabei gibt diese Faserausrichtung der Steifigkeit des Bauteils eine bevorzugte Richtung, die anhand der an das Bauteil bzw. an die Platte gestellten mechanischen Anforderungen ausgewählt werden kann. Die Querblattfeder ist an zwei Stellen bezüglich der X-, Y- und Z-Koordinaten fixiert. Außerdem ist die Querblattfeder an zwei Stellen bezüglich der Z-Koordinate fixiert und bezüglich dem X- und Y-Koordinaten relativ beweglich gelagert. Durch diese besondere Fixierung wird an der Querblattfeder eine Hubfederung ausgebildet, die Drehbewegungen des an der Querblattfeder gelagerten Rades um eine durch die in Fahrtrichtung hintereinander angeordneten, jeweils in Z-Richtung fixierten Stellen verlaufende Achse ermöglicht. Das Eigenlenkverhalten des an der Querblattfeder gelagerten Rades wird dadurch beeinflußt, daß auf das Rad einwirkende Seitenkräfte - aufgrund der in X- und Y-Richtung beweglichen Lagerung und aufgrund der bezüglich der Raumkoordinaten X, Y, Z fixierten Lagerung - eine Drehverstellung des Rades um eine durch die im Raum fixierte Lagerstelle sowie parallel zur Z-Achse verlaufende Schwenkachse bewirken. Die bekannte Querblattfeder dient somit als Hubfederung und kann außerdem das Eigenlenkverhalten des Rades beeinflussen, wobei sich diese unterschiedlichen Funktionen durch die Wahl der Fixierung der Querblattfeder an der Fahrzeugkarosserie ergeben.

Aus der EP 0 637 520 A2 ist ein aus faserverstärktem Kunststoff hergestellter Federarm bekannt. Durch eine spezielle Ausgestaltung dieses Federarmes, der an geeigneten Bereichen veränderte Materialstärken aufweist, besitzt dieser in einer ersten Richtung eine relative Steifigkeit und in einer anderen Richtung eine relative Flexibilität.

Aus der DE 44 27 716 A1 ist ein Längslenker bekannt, an dem eine Stützstrebe ausgebildet ist, die bei Seitenkräften auf das Rad wie ein Zuganker wirkt und dadurch eine Beeinflussung des Eigenlenkverhaltens des Rades bewirkt.

Aus der DE 195 17 074 A1 ist ein herkömmlicher Schräglenker bekannt, der mit Hilfe eines speziellen Verbindungsflansches an einen Radträger bzw. an das zugehörige Fahrzeugrad angeschlossen ist. Dieser spezielle Verbindungsflansch ist dabei so ausgestaltet, daß er zur Beeinflussung des Eigenlenkverhaltens des Rades dient.

Die Ausgestaltung der Radführung ist insbesondere für das Kurvenverhalten des Fahrzeuges von großer Bedeutung. Um bei schnell gefahrenen Kurven ein Ausbrechen des Fahrzeughecks nach Möglichkeit zu verhindern, wird eine Radführung regelmäßig derart ausgestaltet, daß sich ein Eigenlenkverhalten ergibt, das üblicherweise ein Untersteuern des Fahrzeuges zur Folge hat. Dies bedeutet für den Fahrer eines derart 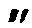 gutmütig" reagierenden Fahrzeuges, daß er gegebenenfalls in der beabsichtigten Lenkrichtung nachlenken muß. Da die Lenkkorrektur dabei in der gleichen Richtung wie die beabsichtigte Lenkung erfolgt, entspricht sie einer natürlichen Reaktion und wird vom Fahrer ohne weiteres und in Regel unbewußt durchgeführt.

Im Unterschied dazu kann eine Radlenkung auch derart ausgestaltet sein, daß sich eine Lenkkinematik ergibt, die bei Kurvenfahrt ein Übersteuern des Fahrzeuges bewirkt. Ein derartiges Lenkverhalten erfordert relativ großes fahrerisches Können und wird hauptsächlich bei sportlich ambitionierten Fahrzeugen realisiert. Bei einer Übersteuerung muß der Fahrer eine Ausgleichslenkbewegung durchführen, die entgegen der ursprünglich beabsichtigten Lenkrichtung gerichtet ist.

Die vorliegende Erfindung beschäftigt sich mit dem Problem, eine Radführung anzugeben, die sich durch einen einfachen Aufbau auszeichnet und eine hohe Fahrsicherheit insbesondere beim Durchfahren von Kurven gewährleistet.

Diese Aufgabe wird erfindungsgemäß mit einer Radführung mit den Merkmalen des Anspruches 1 gelöst.

Die Erfindung beruht auf dem allgemeinen Gedanken, bei einer Radführung Radführungselemente zu verwenden, die anisotrop aufgebaut sind, d.h. richtungsabhängige Steifigkeiten bzw.

Elastizitäten aufweisen und somit je nach Richtung der aufgebrachten Kräfte und/oder Drehmomente in ihrer Ganzheit und/oder in begrenzten, vorbestimmten Abschnitten elastisch verformbar sind. Dabei werden die Radführungselemente derart ausgestaltet und in entsprechender Weise in die Radführung integriert, daß sich in Abhängigkeit der auf das Fahrzeug bzw. die Räder und somit auf die Radführung einwirkender Seitenkräfte Relativbewegungen zwischen Abschnitten dieser Radführungselemente erzeugt werden, die das Eigenlenkverhalten des Fahrzeuges bzw. des jeweiligen Rades in eine gewünschte Richtung beeinflussen. Dabei kann das Eigenlenkverhalten des Fahrzeuges z.B. in Richtung neutral oder untersteuern oder übersteuern variiert werden. Bevorzugt ist jedoch eine Veränderung in Richtung untersteuern, da so die Fahrsicherheit deutlich erhöbt werden kann. Da die Relativbewegungen aufgrund der elastischen Verformbarkeit bestimmter Bereiche der Radführungselemente erfolgen, nimmt im Falle einer gewünschten Veränderung in Untersteuerungsrichtung mit zunehmender Seitenkraft auch die Tendenz zur Untersteuerung des Fahrzeuges zu, d.h. je schneller eine Kurve durchfahren wird, desto 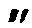 gutmütiger" ist das Kurvenverhalten des Fahrzeuges, wodurch sich die Fahrsicherheit beträchtlich erhöht.

Erfindungsgemäß bewirken somit die Radführungselemente eine seitenkraftinduzierte Lenkverstellung des jeweiligen Rades in Richtung einer Untersteuerung des Fahrzeuges.

Die vom jeweils verwendeten Radführungselement geforderte bzw. gewünschte elastische Verformbarkeit kann beispielsweise durch die Verwendung von Faserverbundkunststoffen erzielt werden, die außerdem mit anderen Werkstoffen wie Metallen und/oder Elastomeren kombiniert werden können. Außerdem kann die gewünschte Anisotropie erreicht werden durch eine gezielte Ausnutzung der gewählten geometrischen Ausformung des Radführungselementes, der verwendeten Querschnitte - wobei sich insbesondere die Widerstandsmomente verändern -, des Materials (z.B. Metall, Kunststoff, Faser-, Matrixmaterial, Faservolumengehalt des Materials, Hybrid-Materialien) und des gewählten Materialaufbaus (z.B. die Faserorientierung, die Schichtenfolge und der dreidimensionale Aufbau). Die vorgenannten Gesichtspunkte zur Beeinflussung der Bauteilelastizität können in gleicher Weise für das ganze Bauteil, als auch für einzelne vorbestimmte Bereiche des jeweiligen Bauteiles berücksichtigt werden.

Durch eine geeignete Ausgestaltung und Anordnung derartiger, anisotrop ausgebildeter Radführungselemente kann das Eigerlenkverhalten dahingehend beeinflußt werden, daß sich in Abhängigkeit der auf das Rad und somit auf die Radführungskomponenten wirkenden Kräfte (z.B. Seiten-, Längs-, Hoch-, Bremskräfte) dar Fahrverhalten des Fahrzeuges nicht nur bezüglich seiner Unter- oder Übersteuerungseigenschaft sondern auch hinsichtlich des Sturzes des jeweiligen Rades, des Wankverhaltens der jeweiligen Achse bzw. des Fahrzeuges sowie der Dämpfungseigenschaften am jeweiligen Rad in vorbestimmter Weise verändert.

Das auf diese Weise ausgebildete Radführungselement kann einen Radführungslenker (Längs-, Quer- oder Schräglenker) und/oder ein Anschlußelement zwischen einem Radführungslenker und einem Radträger und/oder ein Anschlußelement zwischen einem Radlenker und einem Rahmen bzw. Chassis des Kraftfahrzeuges bilden.

Durch die Verwendung der erfindungsgemäß vorgeschlagenen Radführungselemente können die kinematischen und elastokinematischen Eigenschaften der Radführung mit weniger Bauteilen verwirklicht werden. Dadurch wird die Montage und die Wartung der Radführung nach der Erfindung vereinfacht. Verschleißeffekte werden reduziert, da weniger Bauteile Relativbewegungen gegeneinander durchführen. Weitere Vorteile sind darin zu sehen, daß sich das Gewicht der Radführung reduziert und der für die Radführung notwendige Bauraum verkleinert wird.

Weitere wichtige Merkmale und Vorteile ergeben sich aus den Unteransprüchen, den Zeichnungen und aus der nachfolgenden Figurenbeschreibung bevorzugter Ausführungsformen anhand der Zeichnungen. Es zeigen, jeweils schematisch,
- Fig. 1: eine perspektivische Ansicht einer ersten Ausführungsform eines als Querlenker ausgebildeten Radführungselementes,
- Fig. 2: eine perspektivische Ansicht einer zweiten Ausführungsform eines als Querlenker ausgebildeten Radführungselementes,
- Fig. 3: eine perspektivische Ansicht einer dritten Ausführungsform eines als Querlenker ausgebildeten Radführungselementes,
- Fig. 4: eine perspektivische Ansicht einer ersten Ausführungsform eines als Längslenker ausgebildeten Radführungselementes,
- Fig. 5: eine perspektivische Ansicht einer zweiten Ausführungsform eines als Längslenker, ausgebildeten Radführungselementes,
- Fig. 6: eine perspektivische Ansicht einer dritten Ausführungsform eines als Längslenker ausgebildeten Radführungselementes und
- Fig. 7: eine Draufsicht auf eine Hinterachsanordnung mit einer erfindungsgemäßen Radführung.

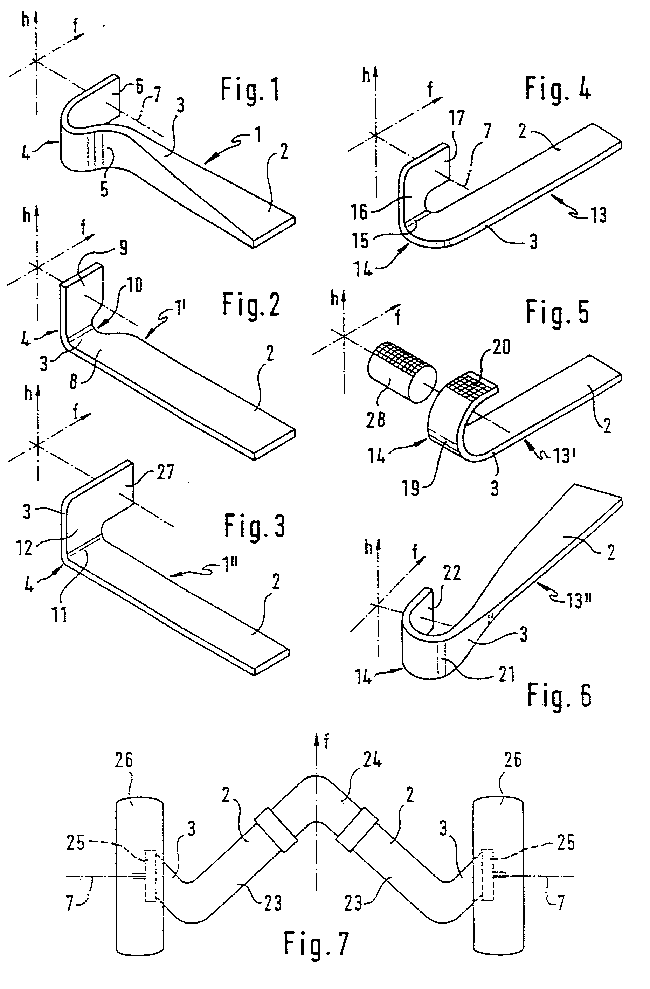

Entsprechend Fig. 1 kann ein bei der erfindungsgemaßen Radführung verwendetes Radführungselement als Querlenker 1 ausgebildet sein. Ein derartiger Querlenker 1 ist in einem ersten Abschritt 2 in Richtung auf das zugehörige Ende des Querlenkers 1 abgeflacht und nach Art einer in Richtung Hochachse h hubelastischen Blattfeder ausgebildet. An diesem Ende kann der Querlenker 1 beispielsweise an einem Rahmen eines Kraftfahrzeuges gekoppelt sein.

In einem an den ersten Abschnitt 2 angrenzenden zweiten Abschnitt 3 weist der Querlenker 1 in Richtung der Hochachse h eine gegenüber dem Blattfederbereich des Querlenkers 1 vergrößerte Abmessung auf. In diesem Bereich ist dementsprechend die Steifigkeit in Richtung der Hochachse h gegenüber dem Blattfederbereich deutlich erhöht. Ein im zweiten Abschnitt 3 des Querlenkers 1 enthaltener Endbereich 4 des Querlenkers 1 weist einen gebogenen ersten Teilbereich 5 auf, der während seines Verlaufes mit zunehmenden Abstand vom ersten Abschnitt 2 des Querlenkers 1 bezüglich einer Parallelen zur Hochachse h zunächst entgegen und im Anschluß daran in Fahrtrichtung f umgebogen ist. An den gebogenen ersten Teilbereich 5 grenzt ein in Fahrtrichtung f verlaufender zweiter Teilbereich 6 an, der beispielsweise an ein Hinterrad des Kraftfahrzeuges gekoppelt sein kann, dessen Drehachse 7 durch eine strichpunktierte Linie symbolisiert ist. Da der Endbereich 4 quer zur Hochachse h relativ geringe Materialabmessungen aufweist und aufgrund seiner gebogenen Ausbildung, ist er insbesondere in Richtung der Drehachse 7 mit einer erhöhten Elastizität ausgestattet.

Beim Durchfahren einer Kurve bewirkt die dabei generierte Fliehkraft eine in Richtung der Drehachse 7 verlaufende, auf das Kurveninnere gerichtete, auf das Hinterrad wirkende Seitenkraft, die im zweiten Teilbereich 6 am Querlenker 1 angreift. Dabei kann der zweite Teilbereich 6 aufgrund der im Endbereich 4 vorhandenen Materialelastizität dieser Seitenkraft nachgeben, wodurch sich eine winkelmäßige Verstellung der Drehachse 7 des Hinterrades bezüglich der Hochachse h einstellt. Aufgrund der gewählten Ausgestaltung des Querlenkers 1 und aufgrund seiner Anordnung innerhalb der Radführung erfolgt die winkelmäßige Verstellung der Drehachse 7 des Hinterrades im gleichen Drehsinn, in dem die Lenkräder zur Einleitung der Kurvenfahrt eingeschlagen sind. Aus diese Weise wird das Fahrzeug untersteuert. Das Maß der Untersteuerung hängt vom Betrag der winkelmäßigen Verstellung der Drehachse 7 und somit über die Elastizität des Endbereiches 4 von der jeweils herrschenden Seitenkraft ab.

Die durch die Erfindung bewirkte seitenkraftinduzierte Lenkverstellung der Räder kann insbesondere bei sportlich ambitionierten Fahrzeugen derart ausgestaltet sein, daß eine grundsätzlich vorgesehene Übersteuerung des Fahrzeuges bei höheren Kurvengeschwindigkeiten bzw. bei größeren Seitenkräften zunächst zunehmend neutralisiert und bei noch stärkeren Seitenkräften in eine Untersteuerung abgeändert wird, um die Fahrsicherheit zu erhöhen. Ebenso kann vorgesehen sein, die seitenkraftinduzierte Lenkverstellung derart zu bemessen, daß ein ständig vorhandenes Übersteuerverhalten durch die erfindungsgemäße Radführung im Hinblick auf eine erhöhte Fahrsicherheit mit zunehmenden Seitenkräften lediglich reduziert wird, ohne daß dabei eine Untersteuerung des Fahrzeuges erreicht wird.

Entsprechend Fig. 2 ist ein anderes Radführungselement ebenfalls als Querlenker 1' ausgebildet. Hierbei ist der den Endbereich 4 des Querlenkers 1' enthaltende zweite Abschnitt 3 im Vergleich zum ersten Abschnitt 2 mit im wesentlichen gleichbleibender Dicke ausgebildet. Der Endbereich 4 dieses Querlenkers 1' weist einen ersten Teilbereich 8 auf, der bezüglich einer in Fahrtrichtung f verlaufenden Achse etwa um 90° umgebogen ist und in einen parallel zur Hochachse h verlaufenden zweiten Teilbereich 9 übergeht. Im Bereich des gebogenen ersten Teilbereiches 8 ist die Abmessung des Querlenkers 1' bezüglich einer in Fahrtrichtung f gemessenen Dimension verringert bzw. ist der Querlenker 1' bezüglich einer in Fahrtrichtung verlaufenden Dimension im gebogenen Teilbereich 8 mit einer Einschnürung 10 versehen.

Aufgrund dieser Einschnürung 10 bewirkt eine auf das mit dem zweiten Teilbereich 9 gekoppelte Rad wirkende Seitenkraft wiederum eine winkelmäßige Verstellung der Drehachse 7 dieses Rades bezüglich einer Hochachse h. Aufgrund der Anordnung der Einschnürung 10 und des Querlenkers 1' innerhalb der Radführung hat diese Winkelverstellung der Drehachse 7 des Hinterrades wiederum eine Untersteuerung bzw. eine Beeinflussung des Eigenlenkverhaltens in Richtung einer Untersteuerung des Fahrzeuges zur Folge.

Bei einer anderen Ausführungsform entsprechend Fig. 3 eines ebenfalls als Querlenker 1'' ausgebildeten Radführungselementes weist dieses wie das Ausführungsbeispiel aus Fig. 2 wiederum eine im wesentlichen etwa gleichbleibende Materialstärke auf. Der Endbereich 4 des Querlenkers 1'' weist einen ersten Teilbereich 11 auf, der gegenüber dem dem ersten Abschnitt 2 des Radführungselementes zugewandten Bereich etwa um 90° bezuglich einer in Fahrtrichtung f verlaufenden Achse umgebogen ist. Dieser erste Teilbereich 11 grenzt an einen zweiten Teilbereich 12 an, der im wesentlichen parallel zur Hochachse h verläuft. Der zweite Teilbereich 12 ist in Fahrtrichtung f durch einen in Fahrtrichtung f verlaufenden dritten Teilbereich 27 verlängert, der mit dem Rad gekoppelt ist. Aufgrund der gewählten Ausgestaltung dieses Querlenkers 1'' ergibt sich im Endbereich 4 wiederum die gewünschte Elastizität, die bei Auftreten einer Seitenkraft in Richtung der Drehachse 7 des Rades die gewünschte Winkelverstellung dieser Drehachse 7 bezüglich der Hochachse h bewirkt`

Entsprechend Fig. 4 weist ein als Längslenker 13 ausgebildetes Radführungselement eine im wesentlichen gleichbleibende Dicke auf. Dabei verläuft bei diesem Längslenker 13 der erste Abschnitt 2 in Fahrtrichtung f. Auch beim Längslenker 13 ist dieser erste Abschnitt 2 nach Art einer in Richtung der Hochachse h hubelastischen Blattfeder ausgestaltet. An den ersten Abschnitt 2 grenzt der zweite Abschnitt 3 an, der einen Endbereich 14 des Längslenkers 13 enthält. Im Endbereich 14 ist der Längslenker 13 in einem ersten Teilbereich 15 um eine in Fahrtrichtung verlaufende Achse umgebogen. Dieser erste Teilbereich 15 grenzt dabei an einen in Richtung der Hochachse h verlaufenden zweiten Teilbereich 16 an, der mit Hilfe eines daran angrenzenden dritten Teilbereiches 17, der in Fahrtrichtung verläuft, verlängert ist. Dabei ist der dritte Teilbereich 17 mit dem Rad gekoppelt. Der Übergang von dem in Fahrtrichtung verlaufenden Bereich des Längslenkers 13 zum ersten Teilbereich 15 wird mit Hilfe eines Bauteilbereiches in Form eines Viertelkreises erzielt.

Mit Hilfe der in Fig. 4 dargestellten Ausgestaltung des Längslenkers 13 weist dieser in dem als Blattfeder ausgebildeten Abschnitt 2 in Richtung der Hochachse h eine relativ große Elastizität auf, während der Längslenker 13 in seinem Endabschnitt 14 in dieser Richtung eine relativ große Steifigkeit aufweist. In parallel zur Drehachse 7 des Rades verlaufenden Richtungen weist jedoch der die Blattfeder bildende Abschnitt 2 eine relativ große Steifigkeit auf, während der Endbereich 14 in dieser Richtung relativ elastisch ausgebildet ist. Aufgrund der gewählten Anisotrophie und der Anordnung des Längslenkers 13 in der Radführung bewirken auch bei einem als Längslenker 13 ausgebildeten Radführungselement Seitenkräfte, die in Richtung der Drehachse 7 des Rades wirken, ein Nachgeben des Längslenkers 13 in seinem Endbereich 14, derart, daß die Drehachse 7 bezüglich der Hochachse h winkelmäßig verstellt wird. Dabei wird das Lenkverhalten des Rades in Richtung einer Untersteuerung des Fahrzeuges verändert.

Bei einer anderen Ausführungsform entsprechend Fig. 5 weist ein ebenfalls als Längslenker 13' ausgebildetes Radführungselement einen Endbereich 14 auf, der in einem ersten Teilbereich 19 soweit bezüglich einer quer zur Längsrichtung des Fahrzeuges bzw. quer zur Fahrtrichtung f verlaufenden Achse umgebogen ist, daß ein daran angrenzender zweiter Teilbereich 20, der mit dem Rad gekoppelt ist, im wesentlichen in Fahrtrichtung f verläuft. Hierbei ist am Teilbereich 20 ein schraffierter Bereich dargestellt, der die Anbindungsstelle an eine Welle 28 eines im übrigen nicht dargestellten, das Rad tragenden Radträgers bildet. Auch bei einer derartigen Ausgestaltung des Längslenkers 13' bewirkt eine Seitenkraft in Richtung der Drehachse 7, daß sich dieser, insbesondere in seinem Endbereich 14, derart verformt bzw. verwindet, daß die Drehachse 7 bezüglich der Hochachse h winkelmäßig verstellt wird.

Bei einer weiteren Ausführungsform des als Längslenker 13'' ausgebildeten Radführungselementes geht der wiederum als Blattfeder ausgebildete erste Abschnitt 2 mit bezüglich der Hochachse h zunehmender Abmessung in den zweiten Abschnitt 3, der den Endbereich 14 des Längslenkers 13'' enthält, über. Auf diese Weise wird die Steifigkeit in Richtung der Hochachse h mit zunehmendem Abstand vom ersten Abschnitt 2 vergrößert. Auch in diesem Fall weist der Endbereich 14 einen ersten Teilbereich 21 auf, der soweit umgebogen ist, daß ein daran angrenzender zweiter Teilbereich 22 wieder in Fahrtrichtung verläuft. Im Unterschied zu der Ausführungsform entsprechend Fig. 5 ist in diesem Fall die Umbiegung im Endbereich 14 bezüglich einer Parallelen zur Hochachse h ausgeführt.

In Fig. 7 ist eine Hinterachs-Anordnung schematisch wiedergegeben, die aus mehreren anisotrop aufgebauten Bauteilen besteht. Die Hinterachs-Anordnung weist zur Radführung zwei Schräglenker 23 auf, die über ein Kopplungsteil 24 miteinander verbunden sind. Während das Kopplungsteil 24 beispielsweise mit Hilfe einer Zweipunkt-Aufhängung am Rahmen bzw. Chassis des Fahrzeuges befestigt ist, sind die Schräglenker 23 mit Hilfe von Radträgern 25 an die Hinterräder 26 gekoppelt. Die Schräglenker 23 weisen jeweils einen dem Kopplungsteil 24 zugewandten ersten Abschnitt 2 auf, wobei diese derart ausgebildet sind, daß sie in einer bezüglich einer senkrecht zur Zeichnungsebene verlaufenden Hochachse eine Federwirkung aufweisen.

Der jeweils an den ersten Abschnitt 2 angrenzende, dem zugehörigen Rad 26 zugewandte zweite Abschnitt 3 weist im Unterschied dazu eine Elastizität auf, die bei einer Beanspruchung in Richtung der Drehachse 7 elastische Verformungen dieses zweiten Abschnittes 3 bzw. des Schräglenkers 23 ermöglicht. Das die in Hubrichtung elastischen Abschnitte 2 der Schräglenker 23 verbindende Kopplungsteil 24 dient als Stabilisator für diese Hinterachs-Anordnung.

Auch in diesem Fall wird durch die gewählte Ausgestaltung der Schräglenker 23 und deren Anordnung innerhalb der Radführung bewirkt, daß eine auf das jeweilige Rad 26 wirkende Seitenkraft eine Verdrehung der Drehachse 7 des jeweiligen Seitenrades 26 verursacht, derart, daß das Eigenlenkverhalten des gesamten Fahrzeuges in einer gewünschten Richtung, z.B. in Richtung einer Untersteuerung des Fahrzeuges, beeinflußt wird.

## Patentansprüche

1. Führung für ein Rad eines Kraftfahrzeuges, mit das Rad und einen Rahmen des Kraftfahrzeuges koppelnden Radführungselementen (1;13), die zumindest in begrenzten Abschnitten elastisch verformbar ausgebildet sind, wobei durch eine entsprechende Ausgestaltung des Radführungselementes (1;13) die Verformbarkeit vom der Richtung der auf das jeweilige Radführungselement (1;13) aufgebrachten Kräfte und/oder Drehmomente abhängt, derart, daß ein Anwachsen einer quer zur Fahrtrichtung (f) des Kraftfahrzeuges wirkenden Seitenkraft eine zunehmende Veränderung des Eigenlenkverhaltens des Kraftfahrzeuges in einer gewünschten Richtung bewirkt,
**dadurch gekennzeichnet,**
daß das Radführungselement (1;13) einen ersten Abschnitt (2) aufweist, in dem es nach Art einer Hubfeder arbeitet, und einen zweiten Abschnitt (3) aufweist, in dem Seitenkräfte eine Verformung bewirken, bei der sich die Drehachse (7) des mit dem Radführungselement (1;13) gekoppelten Rades winkelmäßig bezüglich einer Hochachse (h) verstellt.

2. Radführung nach Anspruch 1,
**dadurch gekennzeichnet,**
daß der nach Art einer Hubfeder arbeitende, erste Abschnitt (2) des Radführungselementes (1;13) an einem Endbereich des Radführungselementes (1;13) angeordnet und als Blattfeder ausgebildet ist.

3. Radführung nach Anspruch 1 oder 2,
**dadurch gekennzeichnet,**
daß durch die Seitenkräfte das Eigenlenkverhalten des Fahrzeuges in Richtung einer Übersteuerung oder Untersteuerung oder Neutralsteuerung verändert wird.

4. Radführung nach einem der Ansprüche 1 bis 3,
**dadurch gekennzeichnet,**
daß das Radführungselement als Querlenker (1) ausgebildet ist.

5. Radführung nach Anspruch 4,
**dadurch gekennzeichnet,**
daß der Querlenker (1) an einem Endbereich (4) einen bezüglich einer Parallelen zur Hochachse (h) gebogenen ersten Teilbereich (5) aufweist, der in einen in Fahrtrichtung (f) verlaufenden zweiten Teilbereich (6) übergeht, welcher mit dem Rad gekoppelt ist, wobei Seitenkräfte auf das Rad eine elastische Verformung dieses Endbereiches (4) bewirken, derart, daß sich das Rad bezüglich der Hochachse (h) winkelmäßig verstellt.

6. Radführung nach Anspruch 5,
**dadurch gekennzeichnet,**
daß der gebogene erste Teilbereich (5) einen bezüglich parallel zur Hochachse (h) verlaufender Achsen zunächst entgegen der Fahrtrichtung (f) und daran anschließend in Fahrtrichtung (f) gebogenen Verlauf aufweist.

7. Radführung nach Anspruch 4,
**dadurch gekennzeichnet,**
daß der Querlenker (1') an einem Endbereich (4) einen bezüglich einer in Fahrtrichtung (f) verlaufenden Achse gebogenen ersten Teilbereich (8) aufweist, der parallel zur Hochachse (h) verlaufenden zweiten Teilbereich (9) übergeht, welcher mit dem Rad gekoppelt ist, und daß die Breite bezüglich der Fahrtrichtung (f) des gebogenen ersten Teilbereiches (8) kleiner ist als die daran angrenzenden Bereiche des Querlenkers (1'), wobei Seitenkräfte auf das Rad eine elastische Verformung dieses Endbereiches (4) bewirken, derart, daß sich das Rad bezüglich der Hochachse (h) winkelmäßig verstellt.

8. Radführung nach Anspruch 4,
**dadurch gekennzeichnet,**
daß der Querlenker (1'') an einem Endbereich (4) einen bezüglich einer in Fahrtrichtung (f) verlaufenden Achse gebogenen ersten Teilbereich (11) aufweist, der in einen parallel zur Hochachse (h) verlaufenden zweiten Teilbereich (12) übergeht, der mit einem daran angrenzenden, im wesentlichen in Fahrtrichtung (f) verlaufenden dritten Teilbereich (27) verlängert ist, welcher mit dem Rad gekoppelt ist, wobei Seitenkräfte auf das Rad eine elastische Verformung dieses Endbereiches (4) bewirken, derart, daß sich das Rad bezüglich der Hochachse (h) winkelmäßig verstellt.

9. Radführung nach einem der Ansprüche 1 bis 3,
**dadurch gekennzeichnet,**
daß das Radführungselement als Längslenker (13) ausgebildet ist.

10. Radführung nach Anspruch 9,
**dadurch gekennzeichnet,**
daß der Längslenker (13) an einem Endbereich (14) einen bezüglich einer in Fahrtrichtung (f) verlaufenden Achse gebogenen ersten Teilbereich (15) aufweist, der in einen parallel zur Hochachse (h) verlaufenden zweiten Teilbereich (16) übergeht, der mit einem daran angrenzenden, im wesentlichen in Fahrtrichtung (f) verlaufenden dritten Teilbereich (17) verlängert ist, welcher mit dem Rad gekoppelt ist, wobei Seitenkräfte auf das Rad eine elastische Verformung dieses Endbereiches (14) bewirken, derart, daß sich das Rad bezüglich der Hochachse (h) winkelmäßig verstellt.

11. Radführung nach Anspruch 9,
**dadurch gekennzeichnet,**
daß der Längslenker (13') an einem Endbereich (14) einen bezüglich einer quer zur Fahrtrichtung (f) und quer zur Hochachse (h) verlaufenden Achse gebogenen ersten Teilbereich (19) aufweist, der in einen in Fahrtrichtung (f) verlaufenden zweiten Teilbereich (20) übergeht, welcher mit dem Rad gekoppelt ist, wobei Seitenkräfte auf das Rad eine elastische Verformung dieses Endbereiches (14) bewirken, derart, daß sich das Rad bezüglich der Hochachse (h) winkelmäßig verstellt.

12. Radführung nach Anspruch 9,
**dadurch gekennzeichnet,**
daß der Längslenker (13'') an einem Endbereich (14) einen bezüglich einer Parallelen zur Hochachse (h) gebogenen ersten Teilbereich (21) aufweist, der in einen in Fahrtrichtung (f) verlaufenden zweiten Teilbereich (22) übergeht, welcher mit dem Rad gekoppelt ist, wobei Seitenkräfte auf das Rad eine elastische Verformung dieses Endbereiches (14) bewirken, derart, daß sich das Rad bezüglich der Hochachse (h) winkelmäßig verstellt.

13. Radführung nach einem der Ansprüche 1 bis 3,
**dadurch gekennzeichnet,**
daß das Radführungselement als Schräglenker (23) ausgebildet ist.

14. Radführung nach einem der Ansprüche 1 bis 3,
**dadurch gekennzeichnet,**
daß das Radführungselement als zwischen einem Radlenker und einem Radträger angeordnetes Anschlußelement ausgebildet ist, das Relativbewegungen zwischen dem Radlenker und dem Radträger ermöglicht.

15. Radführung nach einem der Ansprüche 1 bis 3,
**dadurch gekennzeichnet,**
daß das Radführungselement als zwischen einem Radlenker und dem Rahmen des Kraftfahrzeuges angeordnetes Anschlußelement ausgebildet ist, das Relativbewegungen zwischen dem Radlenker und dem Rahmen ermöglicht.
